# EUROPEAN PATENT SPECIFICATION

(11) **EP 1 413 153 B1**
(45) Date of publication and mention of the grant of the patent: **09.04.2008**
(21) Application number: 02753310.8
(22) Date of filing: 31.07.2002
(51) Int. Cl.: H04Q 7/22

(54) **AN ARRANGEMENT FOR CLEANING UP HANGING PDP CONTEXTS IN GGSN**
ANORDNUNG ZUM BEREINIGEN HÄNGENDER PDP-KONTEXTE BEI GGSN
DISPOSITIF DE NETTOYAGE DE CONTEXTES PDP EN ATTENTE DANS UN NOEUD DE SUPPORT GPRS DE PASSERELLE

(30) Priority: 01.08.2001 NO 20013780
(43) Date of publication of application: 28.04.2004
(73) Proprietor: TELEFONAKTIEBOLAGET LM ERICSSON (publ), 164 83 Stockholm (SE)
(72) Inventor: EVENSEN, Thommy, N-4820 Froland (NO); KAAFARANI, Ezzat, N-4885 Grimstad (NO); NEVERDAL, Jan, Frode, N-4870 Fevik (NO)
(74) Representative: Tonscheidt, Andreas
(86) International application number: PCT/NO2002/000273
(87) International publication number: WO 2003/013165

(56) References cited:
- WO-A-01/78331
- WO-A-02/32084
- WO-A-99/63774

## Description

### Technical Field

This invention is applicable to the General Packet Radio Service (GPRS) core network in mobile packet switched data systems using GSM or UMTS. The affected GPRS standards are defined by the ETSI organization in the standards 03.60 and 09.60.

### Technical Background

In a data communication network, a Mobile Station (MS) performs attach procedure toward the network in order to access the services and facilities of that network.

After having executed the GPRS attach, the MS may then activate one or more Packet Data Protocol (PDP) contexts in order to send and receive data.

Whenever an MS or Serving GPRS Support Node (SGSN) wants to deactivate a PDP context, there is a risk for getting hanging PDP Contexts in the Gateway GPRS Support Node (GGSN) during abnormal (network) situations.

The GPRS standards are not designed to avoid all possible (fault) situations.

Problems can occur in the following situations (examples):
If the link between SGSN and GGSN is temporarily down, a Delete PDP Context Request from the SGSN towards the GGSN will not reach the GGSN. After a number of retransmissions the SGSN will stop signaling, and deactivate the PDP Context(s) without having informed the GGSN.
If the GGSN receives a Delete PDP Context Request with a protocol error that qualifies to discard the message, the GGSN will not remove the PDP Context. The SGSN and the MS will however remove the PDP Context.
If for other reasons (e.g. node internal data loss) the PDP Context is removed in the SGSN without notifying the GGSN.

A hanging PDP Context occupy resources in the GGSN. The occupied resources are memory storage, processor load and dynamic allocated IP addresses. Another consequence is the generation of charging records by the hanging PDP Contexts.

### Known solutions

1) The ETSI standards 03.60 and 09.60 specify the Error Indication procedure as a solution to this problem. The Error Indication procedure is triggered by downlink payload going from GGSN to SGSN. If no payload is received in the GGSN (from the external network), then this procedure will not work.
2) Currently, hanging PDP Contexts in a GGSN will not be cleaned up until the GGSN node eventually is restarted. However, restart in a live GPRS network should not happen. This means that the PDP contexts might hang on for an undefined period of time.

Document WO 99/63774 discloses a GPRS system, in which a near Anonymous Access PDP Context Activation procedure is initiated if a mobile station in the READY state enters a new routing area. The old context is implicitly deleted upon expiration of a READY timer.

### Brief summary of the invention

An object of the present invention is to provide an arrangement by which the affected node in the core network (i.e. GGSN) can initiate a removal of "hanging" PDP contexts.

Another object of the invention is to regain the memory and processor capacity normally used for hanging PDP Contexts.

These objects are achieved in an arrangement according to the present invention, as claimed in the appended claims 1, 8 and 15.

Other embodiments of the invention are claimed in the following dependent claims.

### Brief description of the drawings

The invention will now be described in detail in reference to the appended drawings, in which:
Figure 1 is a schematic view of a GPRS network with a number of PDP contexts established in the core network,
Figure 2 is a sequence diagram showing the individual steps performed during a deactivation procedure, in this case with a temporary link failure between SGSN and GGSN,
Figure 3 shows the resultant situation, with a hanging PDP context in the GGSN,
Figure 4 shows the corresponding situation, in a system according to the present invention, in which the PDP context concerned has been removed,
Figure 5 shows an additional procedure introduced in one embodiment of the invention, in order to enable an GGSN to detect invalid PDP contexts (i.e. hanging PDP contexts).

### Preferred embodiment of the invention

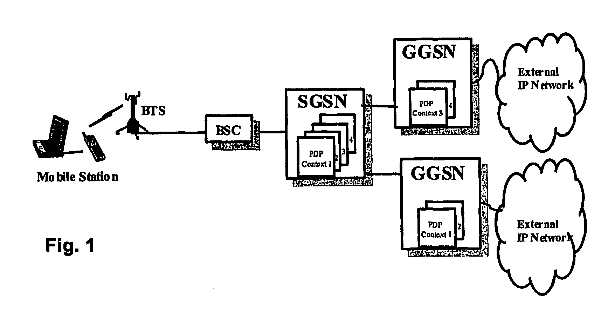

As shown in Fig. 1, after a Mobile Station performs an attach procedure, it will activate one or more PDP contexts by establishing connections between the MS and external network(s) in order to send and receive data. PDP contexts are established in both SGSN and GGSN(s). In the figure, this is shown as four PDP contexts 1-4 that is established in the SGSN. The MS requests services from two different networks. Thus, PDP contexts 1 and 2 are established in the lower GGSN, while PDP contexts 3 and 4 are established in the upper GGSN, which is connected to another network.

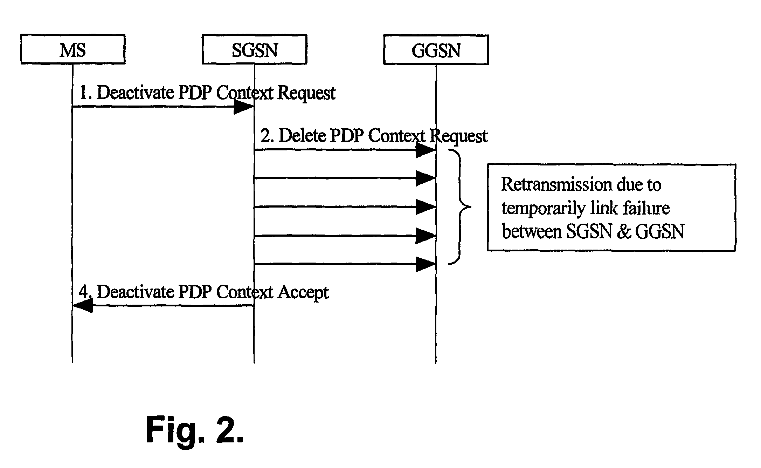

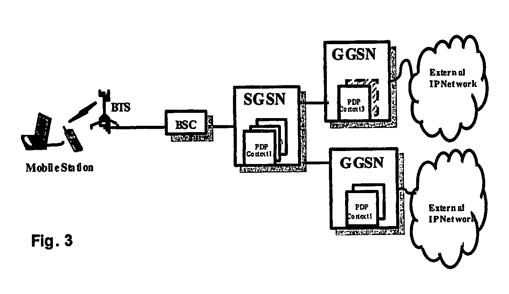

When the MS or SGSN wants to deactivate a PDP context, a deactivation procedure is invoked. However, occasionally problems might arise, as shown in Fig. 2. In step 1 the MS sends a Deactivate PDP Context Request to the SGSN. The SGSN reacts by sending a Delete PDP Context Request to the affected GGSN, step 2. However, in this case there has arisen a temporary link failure in the backbone network between the SGSN and the GGSN. The SGSN will then retransmit the request several times according to a predefined scheme. Eventually it will stop the retransmissions and deactivate the PDP context(s) locally in the SGSN and send a Deactivate PDP Context Accept message to the MS, step 4. However, the SGSN has not succeeded in telling the GGSN. A number of PDP contexts will then remain hanging on in the GGSN concerned, as shown with broken lines in Fig. 3. In this case, the PDP context 4 will remain activated in the upper GGSN, while it is deleted from the SGSN (and the MS). A hanging PDP context will occupy resources in the GGSN.

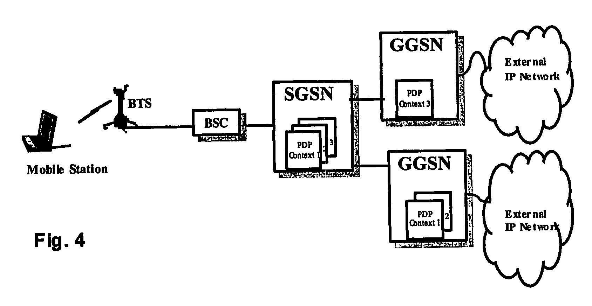

Fig. 4 shows the situation after the introduction of the methods according to the present invention. PDP context 4 has been removed from both the SGSN and GGSN.

According to the invention a new supervision mechanism is introduced in the GGSN in order to discover possible hanging PDP Contexts. The supervision mechanism discovers a possible hanging PDP Context and interrogates the SGSN to check the validity of the PDP Context. If the PDP Context is invalid, it is removed in the GGSN.

### Example:

A guard timer implements the supervision mechanism. The timer will monitor the activity (signaling or payload) registered for a PDP Context. If no activity is registered for this PDP Context before the timer expires, the GGSN will check if the PDP Context exists in the SGSN. If not, this PDP Context is a hanging context and will be implicitly deleted in GGSN.

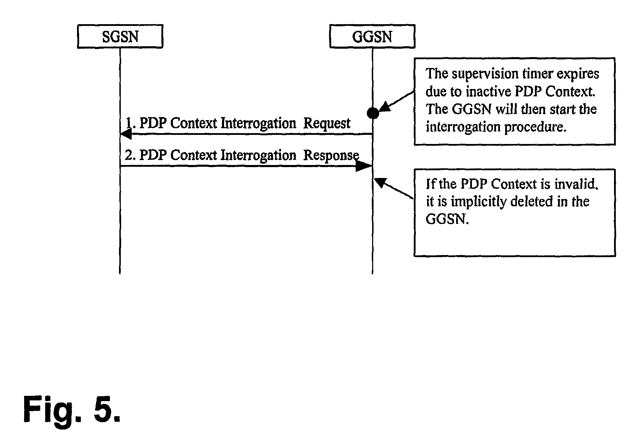

The new procedure to check the validity of the PDP Context could be implemented by one of the two following ways :
1) Interrogation of SGSN by introducing a new signaling message between GGSN and SGSN, as indicated in Fig. 5. When the guard or supervision timer mentioned above expires, the GGSN will send a message to the SGSN interrogating whether the PDP context is valid or not. If the answer from the SGSN indicates that the PDP context is invalid, said context will become deleted in the GGSN.
2) Interrogation of SGSN by adding a new cause value in the existing Delete PDP Context Request message indicating a possible hanging PDP Context. The SGSN will check if the PDP Context exists. If it exists the Delete PDP Context will be rejected. Otherwise the Delete PDP Context Request will be accepted.

## Claims

1. An arrangement in a mobile packet switched communication system, in which system a Mobile Station, MS, is connected to an external network through a radio network interface and a core network, said core network including
• a Serving General Packet Radio Service, GPRS, Support Node, SGSN, and
• a Gateway GPRS support Node, GGSN, and
• in which system a Packet Data Protocol Context is activated at the establishment of a data connection,
**characterized in**
a supervision mechanism implemented in said Gateway GPRS Support Node, GGSN, in order to check for possible hanging Packet Data Protocol Contexts, the Gateway GPRS Support Node, GGSN, being adapted to check the validity of a possible hanging Packet Data Protocol Context towards the Serving GPRS Support Node, SGSN, and if the possible hanging Packet Data Protocol Context is not valid, to delete it.

2. The arrangement as claimed in claim 1, **characterized in that** the supervision mechanism is implemented as a guard timer, said guard timer comprising means for monitoring activity registered on said activated Packet Data Protocol Context, and if no activity is registered before the timer expires said activated Packet Data Protocol Context is reported as possibly hanging.

3. The arrangement as claimed in claim 2, **characterized in that** the monitored activity is signaling or payload activity for said activated Packet Data Protocol Context.

4. The arrangement as claimed in claim 2 or 3, **characterized in that** the Gateway GPRS Support Node, GGSN, is adapted to check said activated Packet Data Protocol Context by sending a message to said Serving GPRS Support Node, SGSN, asking if said activated Packet Data Protocol Context is valid, and if the answer indicates that the Packet Data Protocol Context is invalid to delete said activated Packet Data Protocol Context.

5. The arrangement as claimed in claim 2 or 3, **characterized in that** the Gateway GPRS Support Node, GGSN, is adapted to check said activated Packet Data Protocol Context by sending a Delete Packet Data Protocol Context message to said Serving GPRS Support Node, SGSN, with a cause value indicating a possible hanging Packet Data Protocol Context, and if the message is accepted to delete said activated Packet Data Protocol Context.

6. The arrangement as claimed in any of the claims 1-5, **characterized in that** the mobile packet switched communication system is a Global System for Mobile telecommunications, GSM.

7. The arrangement as claimed in any of the claims 1-5, **characterized in that** the mobile packet switched communication system is a Universal Mobile Telecommunications System, UMTS.

8. A Gateway GPRS Support Node, GGSN, in a mobile packet switched communication system, in which system a Mobile Station, MS, is connected to an external network through a radio network interface and a core network including a Serving GPRS Support Node, SGSN, in which system a Packet Data Protocol Context is activated at the establishment of a data connection,
**characterized in**
means for checking the validity of a possible hanging Packet Data Protocol Context, and means for deleting the possible hanging Packet Data Protocol Context if it is not valid.

9. The Gateway GPRS Support Node, GGSN, as claimed in claim 8, **characterized in that** the Gateway GPRS Support Node, GGSN, comprises a guard timer, said guard timer monitoring activity registered on said activated Packet Data Protocol Context, and if no activity is registered before the timer expires said activated Packet Data Protocol Context is reported as possibly hanging.

10. The Gateway GPRS Support Node, GGSN, as claimed in claim 9, **characterized in that** the monitored activity is signaling or payload activity for said activated Packet Data Protocol Context.

11. The Gateway GPRS Support Node, GGSN, as claimed in claim 9 or 10, **characterized in that** the Gateway GPRS Support Node, GGSN, comprises means for sending a message to said Serving GPRS Support Node, SGSN, asking if said activated Packet Data Protocol Context is valid, and if the answer indicates that the Packet Data Protocol Context is invalid to delete said activated Packet Data Protocol Context.

12. The Gateway GPRS Support Node, GGSN, as claimed in claim 9 or 10, **characterized in that** the Gateway GPRS Support Node, GGSN, comprises means for sending a Delete Packet Data Protocol Context message to said Serving GPRS Support Node, SGSN, with a cause value indicating a possible hanging Packet Data Protocol Context, and if the message is accepted to delete said activated Packet Data Protocol Context.

13. The Gateway GPRS Support Node, GGSN, as claimed in any of the claims 8-12, **characterized in that** the mobile packet switched communication system is a Global System for Mobile telecommunications, GSM.

14. The Gateway GPRS Support Node, GGSN, as claimed in any of the claims 8-12, **characterized in that** the mobile packet switched communication system is a Universal Mobile Telecommunications System, UMTS.

15. A method for a Gateway GPRS Support Node, GGSN, in a mobile packet switched communication system, in which system a Mobile Station, MS, is connected to an external network through a radio network interface and a core network including a Serving GPRS Support Node, SGSN, in which system a Packet Data Protocol Context is activated at the establishment of a data connection,
**characterized in** the steps of
checking the validity of a possible hanging Packet Data Protocol Context, and deleting the possible hanging Packet Data Protocol Context if it is not valid.

16. The method as claimed in claim 15, further comprising the steps of
• monitoring activity registered on said activated Packet Data Protocol Context, and
• if no activity is registered before the timer expires, reporting said activated Packet Data Protocol Context as possibly hanging.

17. The method as claimed in claim 16, **characterized in that** the monitored activity is signaling or payload activity for said activated Packet Data Protocol Context.

18. The method as claimed in claim 16 or 17, further comprising the steps of
• sending a message to said Serving GPRS Support Node, SGSN, asking if said activated Packet Data Protocol Context is valid, and
• if the answer indicates that the Packet Data Protocol Context is invalid, deleting said activated Packet Data Protocol Context.

19. The method as claimed in claim 16 or 17, further comprising the steps of
• sending a Delete Packet Data Protocol Context message to said Serving GPRS Support Node, SGSN, with a cause value indicating a possible hanging Packet Data Protocol Context, and
• if the message is accepted, deleting said activated Packet Data Protocol Context.

20. The method as claimed in any of the claims 15-19, **characterized in that** the mobile packet switched communication system is a Global System for Mobile telecommunications, GSM.

21. The method as claimed in any of the claims 15-19, **characterized in that** the mobile packet switched communication system is a Universal Mobile Telecommunications System, UMTS.

## Patentansprüche

1. Anordnung in einem paketvermittelten Mobilkommunikationssystem, in dem eine Mobilstation, MS, durch eine Funknetzschnittstelle und ein Kernnetz mit einem externen Netz verbunden ist, wobei das Kernnetz Folgendes beinhaltet:
- einen bedienenden GPRS-Unterstützungsknoten, SGSN, (GPRS = allgemeiner Datenpaket-Funkdienst) und
- einen Gateway-GPRS-Unterstützungsknoten, GGSN, und
- wobei in diesem System ein Paketdatenprotokoll-Kontext bei Herstellung einer Datenverbindung aktiviert wird,
**dadurch gekennzeichnet, dass**
in dem Gateway-GPRS-Unterstützungsknoten, GGSN, ein Überwachungsmechanismus umgesetzt ist, um auf mögliche hängende Paketdatenprotokoll-Kontexte zu prüfen, wobei der Gateway-GPRS-Unterstützungsknoten, GGSN, darauf eingerichtet ist, die Gültigkeit eines möglichen hängenden Paketdatenprotokoll-Kontextes in Richtung des bedienenden GPRS-Unterstützungsknotens, SGSN, zu prüfen und, wenn der mögliche hängende Paketdatenprotokoll-Kontext nicht gültig ist, ihn zu löschen.

2. Anordnung nach Anspruch 1, **dadurch gekennzeichnet, dass** der Überwachungsmechanismus als ein Wächter-Timer umgesetzt ist, wobei dieser Wächter-Timer Mittel zum Überwachen einer Aktivität, die auf dem aktivierten Paketdatenprotokoll-Kontext registriert wird, umfasst und, wenn keine Aktivität registriert wird, bevor der Timer abläuft, der aktivierte Paketdatenprotokoll-Kontext als möglicherweise hängend gemeldet wird.

3. Anordnung nach Anspruch 2, **dadurch gekennzeichnet, dass** es sich bei der überwachten Aktivität um eine Signalisierungs- oder Nutzlastaktivität für den aktivierten Paketdatenprotokoll-Kontext handelt.

4. Anordnung nach Anspruch 2 oder 3, **dadurch gekennzeichnet, dass** der Gateway-GPRS-Unterstützungsknoten, GGSN, darauf eingerichtet ist, den aktivierten Paketdatenprotokoll-Kontext zu prüfen, indem eine Nachricht an den bedienenden GPRS-Unterstützungsknoten, SGSN, gesendet wird, die fragt, ob der aktivierte Paketdatenprotokoll-Kontext gültig ist, und, wenn die Antwort anzeigt, dass der Paketdatenprotokoll-Kontext ungültig ist, den aktivierten Paketdatenprotokoll-Kontext zu löschen.

5. Anordnung nach Anspruch 2 oder 3, **dadurch gekennzeichnet, dass** der Gateway-GPRS-Unterstützungsknoten, GGSN, darauf eingerichtet ist, den aktivierten Paketdatenprotokoll-Kontext zu prüfen, indem eine "Paketdatenprotokoll-Kontext löschen"-Nachricht an den bedienenden GPRS-Unterstützungsknoten, SGSN, mit einem Ursachenwert gesendet wird, der einen möglichen hängenden Paketdatenprotokoll-Kontext anzeigt, und, wenn die Nachricht akzeptiert wird, den aktivierten Paketdatenprotokoll-Kontext zu löschen.

6. Anordnung nach einem der Ansprüche 1 - 5, **dadurch gekennzeichnet, dass** es sich bei dem mobilen Paketvermittlungskommunikationssystem um ein globales System für Mobiltelekommunikation, GSM, handelt.

7. Anordnung nach einem der Ansprüche 1 - 5, **dadurch gekennzeichnet, dass** es sich bei dem mobilen Paketvermittlungskommunikationssystem um ein universelles Mobiltelekommunikationssystem, UMTS, handelt.

8. Gateway-GPRS-Unterstützungsknoten, GGSN, in einem paketvermittelten Mobilkommunikationssystem, wobei in diesem System eine Mobilstation, MS, durch eine Funknetzschnittstelle und ein Kernnetz, das einen bedienenden GPRS-Unterstützungsknoten, SGSN, beinhaltet, mit einem externen Netz verbunden ist, wobei in diesem System ein Paketdatenprotokoll-Kontext bei Herstellung einer Datenverbindung aktiviert wird,
**gekennzeichnet durch**
Mittel zum Prüfen der Gültigkeit eines möglichen hängenden Paketdatenprotokoll-Kontextes und Mittel zum Löschen des möglichen hängenden Paketdatenprotokoll-Kontextes, wenn er nicht gültig ist.

9. Gateway-GPRS-Unterstützungsknoten, GGSN, nach Anspruch 8, **dadurch gekennzeichnet, dass** der Gateway-GPRS-Unterstützungsknoten, GGSN, einen Wächter-Timer umfasst, wobei dieser Wächter-Timer eine Aktivität überwacht, die auf dem aktivierten Paketdatenprotokoll-Kontext registriert wird, und, wenn keine Aktivität registriert wird, bevor der Timer abläuft, der aktivierte Paketdatenprotokoll-Kontext als möglicherweise hängend gemeldet wird.

10. Gateway-GPRS-Unterstützungsknoten, GGSN, nach Anspruch 9, **dadurch gekennzeichnet, dass** es sich bei der überwachten Aktivität um eine Signalisierungs- oder Nutzlastaktivität für den aktivierten Paketdatenprotokoll-Kontext handelt.

11. Gateway-GPRS-Unterstützungsknoten, GGSN, nach Anspruch 9 oder 10, **dadurch gekennzeichnet, dass** der Gateway-GPRS-Unterstützungsknoten, GGSN, Mittel zum Senden einer Nachricht an den bedienenden GPRS-Unterstützungsknoten, SGSN, umfasst, die fragt, ob der aktivierte Paketdatenprotokoll-Kontext gültig ist, und, wenn die Antwort anzeigt, dass der Paketdatenprotokoll-Kontext ungültig ist, den aktivierten Paketdatenprotokoll-Kontext zu löschen.

12. Gateway-GPRS-Unterstützungsknoten, GGSN, nach Anspruch 9 oder 10, **dadurch gekennzeichnet, dass** der Gateway-GPRS-Unterstützungsknoten, GGSN, Mittel zum Senden einer "Paketdatenprotokoll-Kontext löschen"-Nachricht an den bedienenden GPRS-Unterstützungsknoten, SGSN, mit einem Ursachenwert umfasst, der einen möglichen hängenden Paketdatenprotokoll-Kontext anzeigt, und, wenn die Nachricht akzeptiert wird, den aktivierten Paketdatenprotokoll-Kontext zu löschen.

13. Gateway-GPRS-Unterstützungsknoten, GGSN, nach einem der Ansprüche 8 - 12, **dadurch gekennzeichnet, dass** es sich bei dem mobilen Paketvermittlungskommunikationssystem um ein globales System für Mobiltelekommunikation, GSM, handelt.

14. Gateway-GPRS-Unterstützungsknoten, GGSN, nach einem der Ansprüche 8 - 12, **dadurch gekennzeichnet, dass** es sich bei dem mobilen Paketvermittlungskommunikationssystem um ein universelles Mobiltelekommunikationssystem, UMTS, handelt.

15. Verfahren für einen Gateway-GPRS-Unterstützungsknoten, GGSN, in einem paketvermittelten Mobilkommunikationssystem, wobei in diesem System eine Mobilstation, MS, durch eine Funknetzschnittstelle und ein Kernnetz, das einen bedienenden GPRS-Unterstützungsknoten, SGSN, beinhaltet, mit einem externen Netz verbunden ist, wobei in diesem System ein Paketdatenprotokoll-Kontext bei Herstellung einer Datenverbindung aktiviert wird, **gekennzeichnet durch** die folgenden Schritte:
Prüfen der Gültigkeit eines möglichen hängenden Paketdatenprotokoll-Kontextes und
Löschen des möglichen hängenden Paketdatenprotokoll-Kontextes, wenn er nicht gültig ist.

16. Verfahren nach Anspruch 15, das weiterhin die folgenden Schritte umfasst:
- Überwachen einer Aktivität, die auf dem aktivierten Paketdatenprotokoll-Kontext registriert wird und
- wenn keine Aktivität registriert wird, bevor der Timer abläuft, Melden des aktivierten Paketdatenprotokoll-Kontextes als möglicherweise hängend.

17. Verfahren nach Anspruch 16, **dadurch gekennzeichnet, dass** es sich bei der überwachten Aktivität um eine Signalisierungs- oder Nutzlastaktivität für den aktivierten Paketdatenprotokoll-Kontext handelt.

18. Verfahren nach Anspruch 16 oder 17, das weiterhin die folgenden Schritte umfasst:
- Senden einer Nachricht an den bedienenden GPRS-Unterstützungsknoten, SGSN, die fragt, ob der aktivierte Paketdatenprotokoll-Kontext gültig ist, und
- wenn die Antwort anzeigt, dass der Paketdatenprotokoll-Kontext ungültig ist, Löschen des aktivierten Paketdatenprotokoll-Kontexts.

19. Verfahren nach Anspruch 16 oder 17, das weiterhin die folgenden Schritte umfasst:
- Senden einer "Paketdatenprotokoll-Kontext löschen"-Nachricht an den bedienenden GPRS-Unterstützungsknoten, SGSN, mit einem Ursachenwert, der einen möglichen hängenden Paketdatenprotokoll-Kontext anzeigt, und
- wenn die Nachricht akzeptiert wird, Löschen des aktivierten Paketdatenprotokoll-Kontexts.

20. Verfahren nach einem der Ansprüche 15 - 19, **dadurch gekennzeichnet, dass** es sich bei dem mobilen Paketvermittlungskommunikationssystem um ein globales System für Mobiltelekommunikation, GSM, handelt.

21. Verfahren nach einem der Ansprüche 15 - 19, **dadurch gekennzeichnet**, es sich bei dem mobilen Paketvermittlungskommunikationssystem um ein universelles Mobiltelekommunikationssystem, UMTS, handelt.

## Revendications

1. Dispositif dans un système de communication mobile à commutation de paquets, dans lequel système une station mobile, MS, est connectée à un réseau externe via une interface de radioréseau et un réseau central, ledit réseau central incluant:
- un noeud de support GPRS (General Packet Radio Service) de desserte, SGSN, et
- un noeud de support GPRS de transit, GGSN, et
- dans lequel système un contexte de protocole de transmission de données en mode paquet (PDP) est activé à l'établissement d'une connexion de données,
**caractérisé par**
un mécanisme de supervision implémenté dans ledit noeud de support GPRS de transit, GGSN, afin de vérifier d'éventuels contextes PDP en attente, le noeud de support GPRS de transit, GGSN, étant adapté afin de vérifier la validité d'un éventuel contexte PDP en attente dans la direction du noeud de support GPRS de desserte, SGSN, et si l'éventuel contexte PDP en attente n'est pas valide, de l'effacer.

2. Dispositif selon la revendication 1, **caractérisé en ce que** le mécanisme de supervision est implémenté comme un temporisateur de garde, ledit temporisateur de garde comprenant des moyens de surveillance de l'activité enregistrée sur ledit contexte PDP activé, et si aucune activité n'est enregistrée avant que le temporisateur arrive à expiration, ledit contexte de protocole PDP activé est rapporté comme étant éventuellement en attente.

3. Dispositif selon la revendication 2, **caractérisé en ce que** l'activité surveillée est une activité de signalisation ou de charge utile pour ledit contexte PDP activé.

4. Dispositif selon la revendication 2 ou 3, **caractérisé en ce que** le noeud de support GPRS de transit, GGSN, est adapté afin de vérifier le contexte PDP activé en envoyant un message audit noeud de support GPRS de desserte, SGSN, demandant si ledit contexte PDP activé est valide, et si la réponse indique que le contexte PDP est invalide d'effacer ledit contexte PDP activé.

5. Dispositif selon la revendication 2 ou 3, **caractérisé en ce que** le noeud de support GPRS de transit, GGSN, est adapté afin de vérifier ledit contexte PDP activé en envoyant un message Effacer le Contexte PDP vers ledit noeud de support GPRS de desserte, SGSN, avec une valeur de cause indiquant un éventuel contexte PDP en attente, et si le message est accepté d'effacer ledit contexte PDP activé.

6. Dispositif selon une quelconque des revendications 1 à 5, **caractérisé en ce que** le système de communication mobile à commutation de paquets est un GSM (Global System for Mobile telecommunciations).

7. Dispositif selon une quelconque des revendications 1 à 5, **caractérisé en ce que** le système de communication mobile à commutation de paquets est un UMTS (Universal Mobile Telecommunciations System).

8. Noeud de support GPRS de transit, GGSN, dans un système de communication mobile à commutation de paquets, dans lequel système une station mobile, MS, est connectée à un réseau externe via une interface de radioréseau et un réseau central incluant un noeud de support GPRS de desserte, SGSN, dans lequel système un contexte PDP est activé à l'établissement d'une connexion de données,
**caractérisé par**
des moyens pour vérifier la validité d'un éventuel contexte PDP en attente, et
des moyens pour effacer l'éventuel contexte PDP en attente si il n'est pas valide.

9. Noeud de support GPRS de transit, GGSN, selon la revendication 8, **caractérisé en ce que** le noeud de support GPRS de transit, GGSN, comprend un temporisateur de garde, ledit temporisateur de garde surveillant l'activité enregistrée sur ledit contexte PDP activé, et si aucune activité n'est enregistrée avant que le temporisateur arrive à expiration, ledit contexte PDP activé est rapporté être éventuellement en attente.

10. Noeud de support GPRS de transit, GGSN, selon la revendication 9, **caractérisé en ce que** l'activité surveillée est une activité de signalisation ou de charge utile pour ledit contexte PDP activé.

11. Noeud de support GPRS de transit, GGSN, selon la revendication 9 ou 10, **caractérisé en ce que** le noeud de support GPRS de transit, GGSN, comprend des moyens pour envoyer un message audit noeud de support GPRS de desserte, SGSN, en demandant si ledit contexte PDP activé est valide, et si la réponse indique que le contexte PDP est invalide d'effacer ledit contexte PDP activé.

12. Noeud de support GPRS de transit, GGSN, selon la revendication 9 ou 10, **caractérisé en ce que** le noeud de support GPRS de transit, GGSN, comprend des moyens pour envoyer un message Effacer le Contexte PDP audit noeud de support GPRS de desserte, SGSN, avec une valeur de cause indiquant un éventuel contexte PDP en attente, et si le message est accepté d'effacer ledit contexte PDP activé.

13. Noeud de support GPRS de transit, GGSN, selon une quelconque des revendications 8 à 12, **caractérisé en ce que** le système de communication mobile à commutation de paquets est un GSM (Global System for Mobile telecommunciations).

14. Noeud de support GPRS de transit, GGSN, selon une quelconque des revendications 8 à 12, **caractérisé en ce que** le système de communication mobile à commutation de paquets est un UMTS (Universal Mobile Telecommunciations System).

15. Procédé pour un noeud de support GPRS de transit, GGSN, dans un système de communication mobile à commutation de paquets, dans lequel système une station mobile, MS, est connectée à un réseau externe via une interface de radioréseau et un réseau central incluant un noeud de support GPRS de desserte, SGSN, dans lequel système un contexte PDP est activé à l'établissement d'une connexion de données,
**caractérisé par** les étapes consistant à
vérifier la validité d'un éventuel contexte PDP en attente, et
effacer l'éventuel contexte PDP en attente si il n'est pas valide.

16. Procédé selon la revendication 15, comprenant en outre les étapes consistant à :
- surveiller l'activité enregistrée sur ledit contexte PDP activé; et
- si aucune activité n'est enregistrée avant que le temporisateur arrive à expiration, rapporter ledit contexte PDP activé comme étant éventuellement en attente.

17. Procédé selon la revendication 16, **caractérisé en ce que** l'activité surveillée est une activité de signalisation ou de charge utile pour ledit contexte PDP activé.

18. Procédé selon la revendication 16 ou 17, comprenant en outre les étapes consistant à :
- envoyer un message audit noeud de support GPRS de desserte, SGSN, en demandant si ledit contexte PDP activé est valide, et
- si la réponse indique que le contexte PDP est invalide, effacer ledit contexte PDP activé.

19. Procédé selon la revendication 16 ou 17, comprenant en outre les étapes consistant à :
- envoyer un message Effacer le Contexte PDP audit noeud de support GPRS de desserte, SGSN, avec une valeur de cause indiquant un éventuel contexte PDP en attente, et
- si le message est accepté, effacer ledit contexte PDP activé.

20. Procédé selon une quelconque des revendications 15 à 19, **caractérisé en ce que** le système de communication mobile à commutation de paquets est un GSM (Global System for Mobile telecommunciations).

21. Procédé selon une quelconque des revendications 15 à 19, **caractérisé en ce que** le système de communication mobile à commutation de paquets est un UMTS (Universal Mobile Telecommunciations System).
